# EUROPEAN PATENT SPECIFICATION

(11) **EP 3 018 669 B1**
(45) Date of publication and mention of the grant of the patent: **03.10.2018**
(21) Application number: 14819431.9
(22) Date of filing: 27.06.2014
(51) Int. Cl.: H01G 2/02, H01G 2/04, H01G 9/08, H01G 9/26

(54) **CAPACITOR MODULE, AND PRODUCTION METHOD THEREFOR**
VERDICHTERMODUL UND HERSTELLUNGSVERFAHREN DAFÜR
MODULE DE CONDENSATEUR ET SON PROCÉDÉ DE FABRICATION

(30) Priority: 01.07.2013 JP 2013137876; 01.07.2013 JP 2013137879
(43) Date of publication of application: 11.05.2016
(73) Proprietor: Nippon Chemi-Con Corporation, Tokyo 141-8605 (JP)
(72) Inventor: ICHIKURA, Osamu, Tokyo 141-8605 (JP)
(74) Representative: Addiss, John William
(86) International application number: PCT/JP2014/003437
(87) International publication number: WO 2015/001773

(56) References cited:
- WO-A1-2013/077389
- WO-A1-2013/077389
- JP-A- 2008 204 988
- JP-A- 2010 109 024
- JP-A- 2012 151 223
- US-A1- 2012 243 142
- US-A1- 2012 262 877

## Description

### TECHNICAL FIELD

The technique of this disclosure relates to a capacitor module including plural capacitors and a production method therefor.

### BACKGROUND ART

A capacitor is used to accumulate electric energy in a machine such as an automobile that uses electric energy in its driving and braking thereof. The capacitor is excellent in the rapid charging and the rapid discharging properties, and is therefore suitable for a machine such as an automobile to which rapidness of starting up and braking is required.

When a shift to larger capacitance is required to a capacitor to support the electric power necessary for the starting up and the braking of the machine on which the capacitor is mounted, the necessary capacitance and a shift to a higher voltage are facilitated by using plural capacitors. In this case, a capacitor module is used that is formed by assembling plural capacitors.

It is known for such a capacitor module that the plural capacitors are covered by a case member (for example, Patent Document 1). It is also known that a space between a capacitor and a case member is filled with an insulation resin to form a capacitor module of which the capacitor is insulated and firmly fixed to the inside of the case member (for example, Patent Document 2 and Patent Document 3). On the other hand, higher insulation and weight reduction are required to capacitor modules while, when the space is filled with the insulation resin, though the anchorage strength and the insulation property are improved, the weight reduction is obstructed. A capacitor module not filled with any insulation resin is also contemplated (for example, Patent Document 4). In a capacitor module including plural capacitors, a wiring substrate having a circuit pattern formed thereon is mounted on the capacitor module to link the plural capacitors using connection in series, connection in parallel, connection in parallel and series, or the like so as to realize desired capacitance and a desired withstanding voltage.

### PRIOR ART DOCUMENTS

### PATENT DOCUMENTS

Patent Document 1: Japanese Laid-Open Patent Publication No. 2008-204988
Patent Document 2: Japanese Laid-Open Patent Publication No. 2010-87269
Patent Document 3: Japanese Laid-Open Patent Publication No. 2007-14085
Patent Document 4: Japanese Laid-Open Patent Publication No. 2005-94942

US2012/243142 discloses a capacitor assembly in which a lower enclosure has a first recess. A first annular retainer is adapted for engaging a lower portion of a capacitor and the first recess. The first annular retainer has a plurality of tabs that extend radially outward from an outer diameter surface of the first annular retainer. Each of the tabs has a sloped surface or a peaked surface for compression of the first annular retainer against the capacitor. An upper enclosure has a plurality of second recesses. A second annular retainer is adapted for engaging an upper portion of the capacitor and the second recesses. The second annular retainer has a plurality of protrusions that extend upward from the second annular retainer. Each of the protrusions has a slit for receiving a wedge, such that if the protrusions engage the wedge the second annular retainer is compressed against the capacitor.

WO2013/077389 discloses a capacitor device that has an accommodating case in which a plurality of accommodating parts are formed for accommodating capacitor main bodies, the plurality of accommodating parts are oriented so that the longitudinal directions thereof all face the same direction, and the plurality of capacitor main bodies are accommodated in the accommodating parts in a manner such that the sides having terminal parts are set up in the same orientation. The sides of the capacitor main bodies having the terminal parts are provided with engaging parts that engage with engaged parts provided to a predetermined element member, and the capacitor main bodies are accommodated all together in the accommodating case in a manner such that the engaging parts are engaged with the engaged parts.

### SUMMARY OF THE INVENTION

### PROBLEMS TO BE SOLVED BY THE INVENTION

As to a capacitor used in such a capacitor module, a capacitor element is inserted into an exterior case formed from aluminum and having a cylinder-like shape with a bottom, a sealing plate integrally provided with external terminals is disposed in an opening of the exterior case, a sealing curling portion is thereby formed, the sealing plate is thereby fixed, and the capacitor is sealed. The sealing curling portion is a curved portion applied with a curling process. When a force deforming the curved portion is applied to the curved portion, the sealing strength of the sealing plate by the sealing curling portion may be varied.

In the capacitor module, the plural capacitors are attached in the case member. This attachment is performed by inserting each capacitor into an accommodating portion of the case member. During this attachment, a stress may be applied to the exterior case for each capacitor inserted into the case member. When this stress acts on the described sealing curling portion to press the sealing curling portion and a condition that this stress is applied thereto continues, a problem arises that the sealing strength of the exterior case is degraded resulting in degradation of the performance of the capacitor. It is then taken that the accommodating portion of the case member is molded so that the inner diameter thereof is larger than the outer diameter of the capacitor in order to form a space between the accommodating portion and the capacitor. Employing this structure causes the sealing curling portion not to contact with the accommodating portion when the capacitor is inserted into the accommodating portion or when the capacitor is fixed to the capacitor module, and the load by the stress on the sealing curling portion can be reduced. The formation of the space between the accommodating portion and the capacitor however causes a fixation of the capacitor to the case member to rely on the connection between the external terminals and an auxiliary terminal that are disposed on the sealing plate, and the case member. In this case, due to vibrations applied to the capacitor module when the capacitor module is used, each of the capacitors is vibrated with the external terminals and the auxiliary terminal of the capacitor acting as the fulcrums of the vibration. Stresses are thereby loaded on the auxiliary terminals and the external terminal, and this may lead to degradation of the connection property and the fixative property.

Patent Document 1 to Patent Document 4 include no disclosure and no suggestion for the above problems, and no disclosure and no suggestion for any configuration to solve the problems.

An object of the technique of this disclosure is to avoid the stress applied to the sealing curling portion of each of the plural capacitors and to improve the fixing strength.

### MEANS FOR SOLVING PROBLEMS

According to a first aspect of the present invention there is provided a capacitor module according to claim 1.

The capacitor module according to the first aspect of the present invention may optionally be as specified in any one of claims 2 to 10.

According to a second aspect of the present invention there is provided a production method for a capacitor module according to claim 11.

### EFFECT OF THE INVENTION

According to the technique of this disclosure, any of the following effects can be achieved.
(1)Because the space is present between an inner wall portion of the case member and the capacitor, it can be avoided to apply a stress from the case member to a fixing member and the sealing curling portion.
(2)The sealing curling portion can be protected from the stress applied from the case member, and any degradation of the sealing strength of the capacitor can be prevented. The performance of the capacitor can therefore be maintained.
(3)Because the fixing member is disposed in the space between the accommodating portion of the case member and the capacitor, any vibration of the capacitor can be suppressed and any load by the vibrations on the external terminals and the auxiliary terminal can be reduced. The connection property and the fixative property can therefore be maintained.
(4)Inconvenience can be avoided such as degradation of the capacitor module due to accumulation of water generated in the case.

Other objects, features, and advantages of the technique of this disclosure will become more apparent when reading the embodiments herein with reference to the attached drawings.

### BRIEF DESCRIPTION OF DRAWINGS

[Fig. 1] is a side view of a capacitor module according to a first embodiment.
[Fig. 2] is a plan view and a cross-sectional view of a fixing member.
[Fig. 3] is a cross-sectional view of the capacitor module including the fixing member.
[Fig. 4] is a diagram of an example of a configuration of the fixing member and an example of an installation state thereof to a main case.
[Fig. 5] is an enlarged cross-sectional view of a VA portion and a VB portion in Fig. 3.
[Fig. 6] is a perspective view of a portion of each of the main case, the fixing member, and capacitors of the capacitor module.
[Fig. 7] is a partial cross-sectional view of engagement between the main case and the fixing member.
[Fig. 8] is an exploded perspective view of a case member of the capacitor module.
[Fig. 9] is a cross-sectional view of the cross-sections of the portions depicted in Fig. 1.
[Fig. 10] is a diagram of another example of each of the configuration of the fixing member and the installation state thereof to the main case.
[Fig. 11] is a cross-sectional view of an example of a deformation of the case member of the capacitor module.

### EMBODIMENTS FOR CARRYING OUT THE INVENTION

### [First Embodiment]

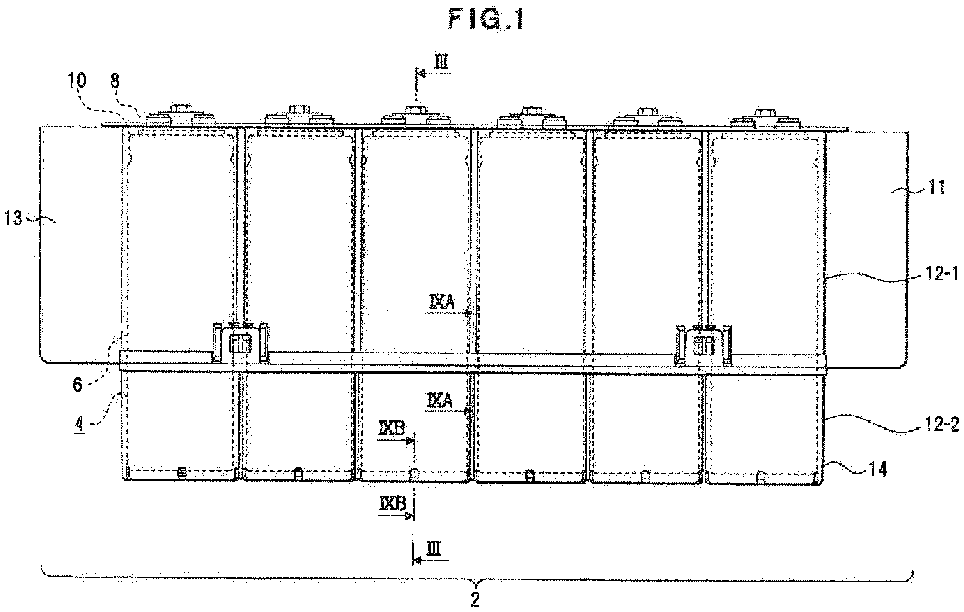

Fig. 1 depicts an example of a configuration of a capacitor module according to a first embodiment. The capacitor module 2 includes plural capacitors 4. Though six capacitors are used in this embodiment, the number thereof may be six or less, or may be six or more. For example, an electric double layer capacitor or an electrolytic capacitor is used as each of the capacitors 4.

Each of the capacitors 4 includes an exterior case 6, and a capacitor element is accommodated in the exterior case 6. The exterior case 6 is formed from, for example, aluminum. An opening of the exterior case 6 is sealed with a sealing plate 8. The sealing plate 8 is formed from an insulating plate made with an insulating synthetic resin or the like. The sealing plate 8 is provided with an anode terminal and a cathode terminal as external terminals, and an auxiliary terminal. During the molding of the sealing plate 8, the anode terminal, the cathode terminal, and the auxiliary terminal are integrally attached to the sealing plate 8 by insert molding. The anode terminal is connected to an anode of the capacitor element and the cathode terminal is connected to a cathode of the capacitor element. The auxiliary terminal is used for fixing the capacitor 4 to a main case 12-1 described later, or the like. The sealing plate 8 is held by a sealing curling portion 10 of the exterior case 6. As to the sealing curling portion 10, an opening edge portion of the exterior case 6 is curved toward the sealing plate 8, and the end thereof is caused to bite into the sealing plate 8 to seal the exterior case 6.

A case member covering the capacitors 4 includes, for example, the main case 12-1 and a bottom case 12-2. The main case 12-1 is an example of a first case portion, and the bottom case 12-2 is an example of a second case portion. The main case 12-1 and the bottom case 12-2 are, for example, molded articles of a thermoplastic synthetic resin.

The main case 12-1 and the bottom case 12-2 are provided therein with, for example, accommodating portions 14 each corresponding to the cylinder-like capacitor 4. Each of the accommodating portions 14 has a cylinder-like shape that corresponds to the shape of the exterior case 6 of the capacitor 4. The accommodating portion 14 is an example of a cylinder portion of this disclosure.

The accommodating portion 14 of the main case 12-1 includes a ceiling portion. The ceiling portion is provided with a through-hole for the external terminals and the auxiliary terminal of the capacitor 4 to penetrate therethrough. A fixing screw is screwed into the auxiliary terminal that penetrates from the through-hole, and each of the capacitors 4 is thereby fixed to the main case 12-1 and is covered with the accommodating portion 14. As to the anode terminal and the cathode terminal, each of these terminals is caused to penetrate from the through-hole disposed in the ceiling portion of the main case 12-1 and is electrically connected using a bus bar. The capacitor module may have a structure having no auxiliary terminal disposed therein and causing the connection between each of the external terminals and the bus bar to also act as the fixation between the main case 12-1 and the capacitor 4.

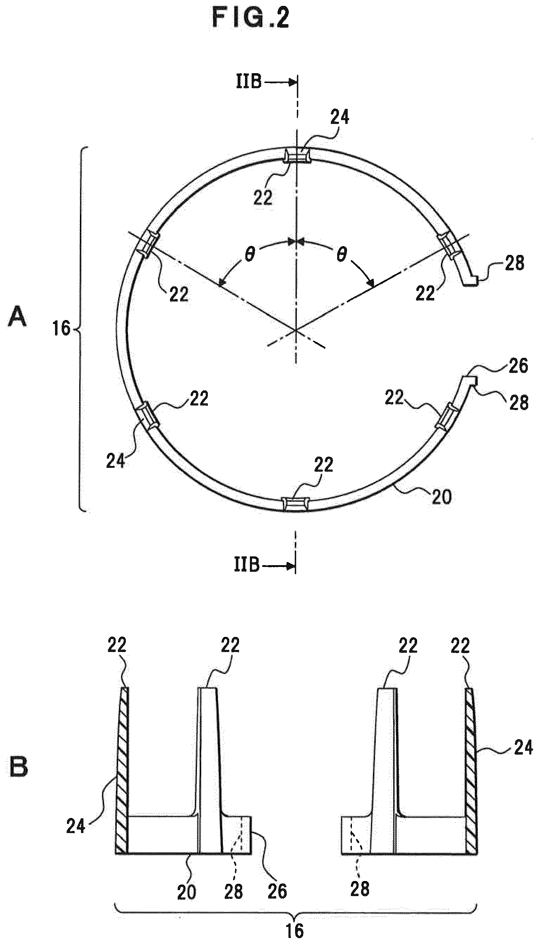

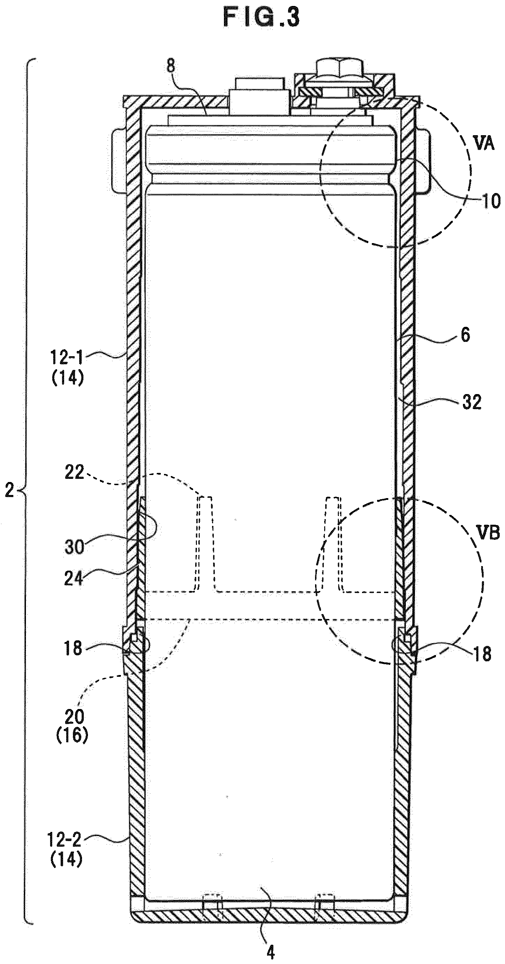

A fixing member 16 (Fig. 2) is inserted together with the capacitor 4 into the accommodating portion 14 of the main case 12-1. The fixing member 16 is installed between an inner wall portion of the accommodating portion 14 of the main case 12-1 and the exterior case 6 of the capacitor 4. Plural locking protrusions 18 (Fig. 3) are formed on the accommodating portion 14 of the bottom case 12-2. Each of the locking protrusions 18 is an example of a locking portion. The locking protrusion 18 protrudes from the inner wall face of the accommodating portion 14 of the bottom case 12-2 toward the main case 12-1.

Attaching portions 11 and 13 are formed in the ends of the main case 12-1. Each of the attaching portions 11 and 13 is an example of a means to fix the capacitor module 2 to the machine where the capacitor module 2 is mounted. The attaching portions 11 and 13 may each be provided with a through-hole to attach the fixing screw. As to the adjacent capacitors 4, for example, the anode terminal or the cathode terminal of each of the adjacent capacitors 4 may be connected to each other by a bus bar or a terminal fixing screw that is an example of a coupling member. Examples of this connection form of the capacitors 4 include the states each properly selectable according to the purpose such as connection in parallel, connection in series, and connection in series and parallel.

A of Fig. 2 depicts a planer shape of the fixing member 16. B of Fig. 2 depicts an IIB-IIB cross-section of A of Fig. 2.

The fixing member 16 is formed from, for example, a thermoplastic synthetic resin and has flexibility. The fixing member 16 includes an annular portion 20 and the annular portion 20 includes plural wedge portions 22. The annular portion 20 covers the circumferential portion of the exterior case 6 of the capacitor 4, and has an inner diameter enabling the annular portion 20 to fit on the circumferential portion. The outer diameter of the fixing member 16 is designed to be larger than the inner diameter of the accommodating portion 14. The wedge portions 22 protrude toward the inside of the annular portion 20 in a direction perpendicular to the annular portion 20 as an example of the direction of intersection with the annular portion 20, and each include a tapered face 24 that matches with an outer wall face of the annular portion 20. The wedge portions 22 are formed at angle intervals of, for example, 60 degrees as the angle θ.

In the annular portion 20, a cut-out portion 26 is formed. In ends facing each other on the cut-out portion 26, an engagement protrusion 28 is formed. The engagement protrusion 28 is an example of an engagement portion of this disclosure and protrudes from the outer circumference of the annular portion 20.

Fig. 3 depicts a longitudinal cross-section of the capacitor module 2. In the capacitor module 2, the capacitors 4 are covered by the main case 12-1 and the bottom case 12-2, and the main case 12-1 and the bottom case 12-2 are engaged with each other to configure one case member.

The fixing member 16 is put on the capacitor 4 to cover the outer circumference of the capacitor 4 at a position avoiding the sealing curling portion 10, and is disposed together with the capacitor 4 on the side of the main case 12-1. In the inner wall face of the main case 12-1 a tapered face 30 is formed.

The tapered face 30 of the main case 12-1 is formed such that the inner diameter thereof gradually increases toward the opening of the main case 12-1, that is, the coupling side of the main case 12-1 to the bottom case 12-2. As the fixing member 16 is inserted deeper into the accommodating portion 14, because of the tapered face 30 and the tapered face 24 of the fixing member 16, the cut-out portion 26 gradually narrows and the fixing member 16 gradually shrinks toward the outer circumferential face of the capacitor 4 to clamp the capacitor 4. The tapered face 24 of the fixing member 16 is brought into contact with the tapered face 30, and the fixing member 16 is held on the inner wall face of the main case 12-1 due to the friction therebetween so as to dispose the fixing member 16 in a space 32 between the accommodating portion 14 and the capacitor 4. The fixing member 16 is thereby installed on the side of the opening of the main case 12-1.

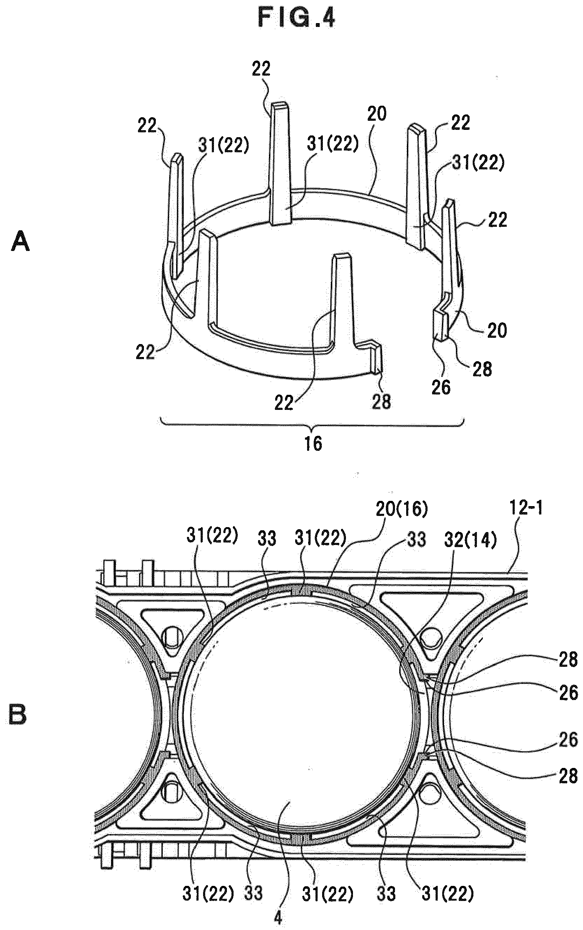

As depicted in A of Fig. 4, the wedge portions 22 of the fixing member 16 are discontinuously formed on the annular portion 20 at constant intervals. As to the fixing member 16, portions of the inner circumferential face of the annular portion 20 form protruding portions 31, and the protruding portions 31 and the inner circumferential faces of the wedge portions 22 are coupled with each other respectively to form one same inner circumferential face.

As the fixing member 16 is inserted deeper into the accommodating portion 14, the fixing member 16 is altered to shrink against the capacitor 4. In this case, for example, as depicted in B of Fig. 4, the fixing member 16 does not evenly press the overall outer circumferential face of the capacitor 4 while the fixing member 16 strongly presses partially the outer circumferential face of the exterior case 6 of the capacitor 4 with the wedge portions 22 and is fixed. Even when the capacitor module 2 is vibrated, because of the strong pressing, any move of the accommodating portion 14 toward the opening is suppressed and the fixation is maintained.

The pressing can partially be enhanced depending on the shape, the size, etc. of each of the wedge portions 22 or the degree of the clamping during the insertion, and the exterior case 6 is therefore deformed toward the capacitor element and the wedge portions 22 are fixed to bite into the capacitor 4. The fixation can thereby be enhanced. Compared to the case where the overall circumference is pressed, in the case where the circumference is partially pressed, as described in the embodiment, the outer circumferential face of the capacitor 4 tends to be deformed and the wedge portions 22 are fixed to bite into the outer circumferential face of the capacitor 4. The capacitor 4 can therefore effectively be fixed to the capacitor module 2. This is because, when the cylinder-like capacitor 4 is pressed from its side face, partially pressing the capacitor 4 more easily deforms the exterior case 6 toward the capacitor element than evenly pressing the overall capacitor 4.

The space 32 is formed between the inner wall face of the accommodating portion 14 of the main case 12-1 and the outer circumferential face of the capacitor 4. The sealing curling portion 10 of the capacitor 4 is disposed in the space 32 to avoid any adhesion of the main case 12-1 to the sealing curling portion 10. On the other hand, the disposition of the fixing member 16 in the space 32 buries a portion of or the overall space 32 present between the inner wall face of the main case 12-1 and the outer circumferential face of the capacitor 4. Even when the capacitor module 2 is vibrated due to the influence in the usage environment, the fixing member 16 can prevent any vibration of the capacitor 4 in the accommodating portion 14. The prevention of any vibration of the capacitor 4 enables reduction of the load applied to the external terminals and the auxiliary terminal. The strength of the fixation of the capacitor 4 to the main case 12-1 is improved.

As to the fixing member 16, for example, the protruding portion 31 on the inner side of the wedge portion 22 is brought into contact with the capacitor 4, and a space 33 is thereby formed between the inner wall face of the annular portion 20 except the protruding portions 31 and the capacitor 4. The space 33 is formed in the space 32 between the inner wall face of the main case 12-1 and the outer circumferential face of the capacitor 4. As to the capacitor module 2, the space 33 is formed between the fixing member 16 and the capacitor 4, and the space 33 functions as a means to cause the dew condensation water generated in the accommodating portion 14 and water infiltrating from the exterior to flow. The capacitor module 2 can thereby prevent any water from accumulating within the accommodating portion 14. A water discharging means may be formed in each of the main case 12-1 and the bottom case 12-2. The accumulating water can thereby be discharged to the exterior.

The cylinder-like accommodating portion 14 is disposed in the bottom case 12-2. When the bottom case 12-2 is fitted into bottom sides of the capacitors 4 and is coupled to the main case 12-1, each of the capacitors 4 is accommodated in a side of the bottom case 12-2. The capacitors 4 are fitted into the accommodating portion 14 of the bottom case 12-2, and the capacitors 4 firmly stick to the bottom case 12-2. Even when
the vibrations are applied to the capacitor module 2, the fitting of the bottom case 12-2 and the capacitors 4 enables reduction of the load by the vibrations of the capacitors 4 and enables reduction of the load applied to the external terminals and the auxiliary terminal of each of the capacitors 4.

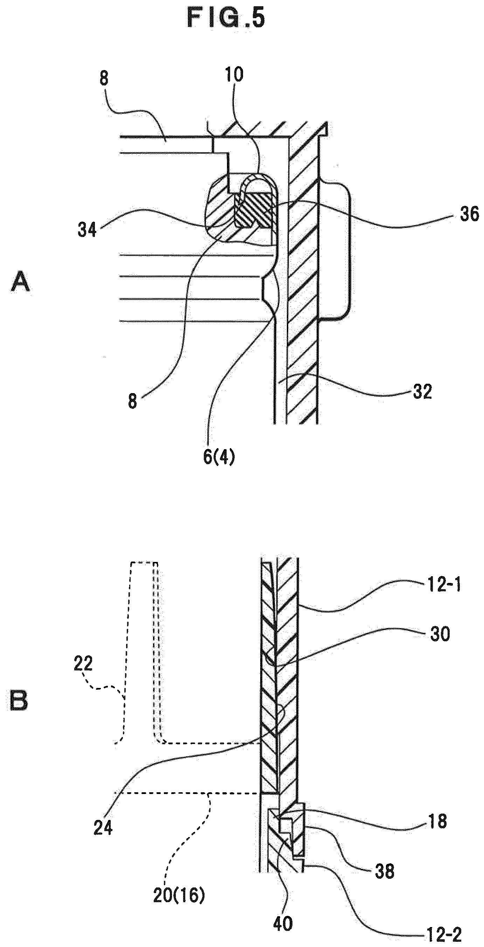

A of Fig. 5 depicts a VA portion of Fig. 3 in an enlarged manner. For the sealing plate 8 that seals the opening of the exterior case 6 of the capacitor 4, the sealing curling portion 10 is a portion that is caused to bite into a sealing member 36 of the sealing plate 8 by applying a curling process to an opening edge portion 34 of the exterior case 6. The disposition of the sealing curling portion 10 in the space 32 between the exterior case 6 and the main case 12-1 enables avoidance of the stress applied from a side of the main case 12-1 to the sealing curling portion 10. Because the sealing curling portion 10 is disposed in the space 32, any contact can be avoided between the sealing curling portion 10 and the inner wall of the main case 12-1 and any stress applied from the main case 12-1 to the sealing curling portion 10 can be avoided. The disposition of the fixing member 16 between the main case 12-1 and the capacitor 4 enables definite securing of the space 32 and enables further avoidance of any contact between the sealing curling portion 10 and the inner wall of the main case 12-1.

B of Fig. 5 depicts a VB portion of Fig. 3 in an enlarged manner. The annular portion 20 and the wedge portions 22 of the fixing member 16 are disposed on the side of the main case 12-1. A large diameter portion 38 of the main case 12-1 is fitted with a small diameter portion 40 of the bottom case 12-2. The locking protrusion 18 protruding from the opening side of the bottom case 12-2 is fitted into the inside of the main case 12-1. In the case where an excessive vibration impact is applied to the capacitor module 2, even when the fixing member 16 receives a force that causes the fixing member 16 to move toward the opening side of the main case 12-1, the locking protrusion 18 blocks a move of the fixing member 16 and the fixing member 16 is not moved to the bottom case 12-2. Even when the fixing member 16 is moved, the fixing member 16 is not released from the capacitor 4 and the fixation can therefore be maintained between the main case 12-1 and the capacitor 4.

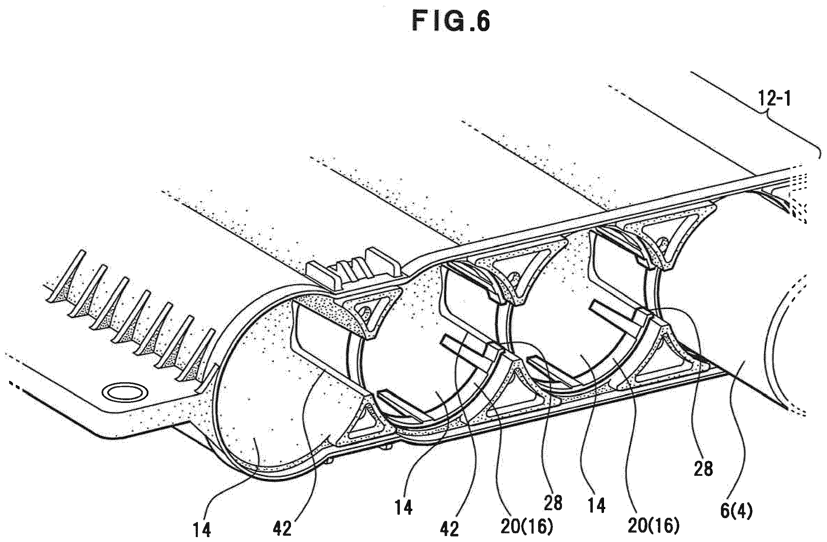

Fig. 6 depicts a portion of each of the main case 12-1, the fixing member 16, and the capacitor 4 of the capacitor module 2 that are seen from the opening side of the main case 12-1.

A cut-out portion 42 is formed in the wall portion of the adjacent accommodating portions 14 of the main case 12-1. The cut-out portion 42 is an example of a window portion inserted between each of the accommodating portions 14. The engagement protrusions 28 of the fixing member 16 disposed on the main case 12-1 are inserted into and engage with the cut-out portion 42.

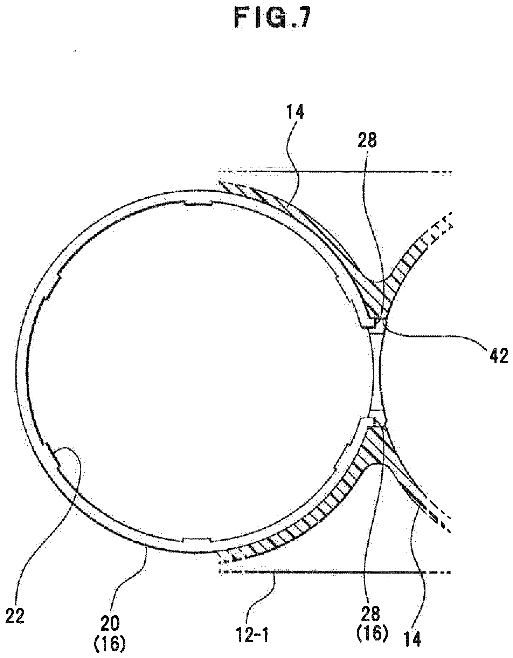

Fig. 7 depicts the engagement between the engagement protrusion 28 of the annular portion 20 of the fixing member 16 inserted into the side of the main case 12-1 and the cut-out portion 42 of the side of the main case 12-1. The fixing member 16 can move in the direction of the central axis of the capacitor 4 within the range of the cut-out portion 42 due to the engagement between the engagement protrusion 28 and the cut-out portion 42. The engagement between the engagement protrusion 28 and the cut-out portion 42 blocks any move in the direction of circumference of the fixing member 16.

### <Effects of First Embodiment>

(1)Because the space 32 is disposed between the main case 12-1 and the capacitor 4, the sealing curling portion 10 of the capacitor 4 to be a caulked portion of the exterior case 6 can avoid any pressing by the inner wall of the main case 12-1 during the insertion of the capacitor 4 into the main case 12-1 and the fixation of the capacitor 4, and any load applied to the sealing curling portion 10 can be avoided. The sealing property of the exterior case 6 of the capacitor 4 is not degraded.
(2)Because the fixing member 16 is inserted into the space 32 between the main case 12-1 and the capacitor 4, any vibration applied to the capacitor 4 from the side of the main case 12-1 can be suppressed. The external terminals of the capacitor 4 are fixed to the main case 12-1 while any vibration of a side of the bottom portion of the capacitor 4 with the fixing portions of the external terminals as fulcrums can be suppressed. The load applied to the connecting portion of a side of the external terminals of the capacitor 4 can be reduced. The connection property of the external terminals can thereby be maintained.
(3)The capacitor 4 is supported by disposing the fixing member 16 in the space 32 between the accommodating portion 14 of the main case 12-1 and the capacitor 4, and the space can thereby securely be disposed between the accommodating portion 14 and the capacitor 4 on the side of the sealing. The capacitor 4 can thereby avoid any load applied from the main case 12-1 to the sealing curling portion 10.
(4)For the fixing member 16, the engagement protrusions 28 engage with the cut-out portion 42 of the main case 12-1 to identify the engagement position and the fixing member 16 is fixed to the main case 12-1. Any rotation of the fixing member 16 is thereby prevented.
(5)When the fixing member 16 is inserted into the main case 12-1, the engagement of the engagement protrusions 28 of a side of the fixing member 16 and the cut-out portion 42 of the accommodating portion 14 functions as an insertion guide for the fixing member 16 to the main case 12-1. The insertion precision and the insertion direction of the fixing member 16 are thereby identified, and any inconvenience can thereby be prevented such as insertion of the fixing member 16 being inclined into the accommodating portion 14 of the main case 12-1.
(6)Because the engagement protrusions 28 engage with the cut-out portion 42 of the main case 12-1, the fixing member 16 can be prevented from breaking away from the cut-out portion 42 even when the fixing member 16 receives any vibration from the main case 12-1.
(7)The locking protrusion 18 to be inserted into the main case 12-1 is formed in the bottom case 12-2, and the locking protrusion 18 is inserted into the space 32 between the main case 12-1 and the capacitor 4. The locking protrusion 18 controls the move of the fixing member 16 toward the opening side of the main case 12-1 generated when an excessive vibration impact is applied to the capacitor module 2, and the fixation can be maintained between the main case 12-1 and the capacitor 4.
(8)The inner wall of the accommodating portion 14 of the main case 12-1 includes the tapered face 30 and the wedge portion 22 of the fixing member 16 includes the tapered face 24. The tapered faces 24 and 30 contact with each other and, due to the friction therebetween, the fixing member 16 can be fixed to the main case 12-1. In this case, the wedge portion 22 can fix the fixing member 16 by advancing up to the inside of the main case 12-1.
(9)Because the locking protrusion 18 of the side of the bottom case 12-2 functions as a stopper against the fixing member 16 and the fixing member 16 is fixed by the locking protrusion 18 at a positioning position in the main case 12-1, the fixing member 16 can be prevented from breaking away from the cut-out portion 42 even when any vibration or any impact is applied to the fixing member 16.
(10)The stopper function of the locking protrusion 18 can stabilize the holding function of the capacitor 4 in the main case 12-1 and can maintain the vibration suppression effect of the main case 12-1 for the capacitor 4 .
(11)The fixing members 16 are formed separately from the main case 12-1, are separately inserted into the accommodating portions 14 respectively, and are disposed in the accommodating portions 14 respectively. The fixing member 16 can therefore be disposed at a position to suppress any vibration for each accommodating portion 14 by inserting the fixing member 16 up to the position even when the size of the capacitor 4 has dispersion and the size of the space 32 between the capacitor 4 and the inner wall face of the accommodating portion 14 varies for each accommodating portion 14. When the capacitor 4 is relatively small and the space 32 generated between the capacitor 4 and the inner wall face of the accommodating portion 14 is large, the fixing member 16 can be inserted up to the upper portion of the accommodating portion 14 and any vibration of the capacitor 4 is suppressed. When the capacitor 4 is relatively large and the space 32 between the capacitor 4 and the inner wall face of the accommodating portion 14 is small, the fixing member 16 is disposed at a position close to the opening of the accommodating portion 14 and, similarly, any vibration of the capacitor 4 can be suppressed. Because the fixing members 16 are inserted into and are disposed in the accommodating portions 14 respectively as above, even when the size of the capacitor 4 varies, the fixing member 16 can individually be disposed at a proper position corresponding to the size of the capacitor 4 and suppression of any vibration can be facilitated regardless of the size of the capacitor 4.

### [Second Embodiment]

Examples of configurations of the main case 12-1 and the bottom case 12-2 that accommodate the plural capacitors 4 will be described. When the capacitor module 2 is mounted on, for example, an automobile etc., the capacitor module 2 is installed outside the vehicle interior and is exposed to the outer air. The capacitor module 2 may therefore have water droplets adhering thereto and water may accumulate thereon, due to dew condensation and the like. Even when a water droplet adheres to the case member, the water droplet does not deteriorate the capacitor 4. The water droplet adhering to the case member may however erode the resin constituting the case member.

Because the accommodating portions 14 of the capacitor module 2 of this disclosure are not, for example, filled up with resin or the like, water droplets adhering to the outer surface of the capacitor 4 due to dew condensation may infiltrate into the main case 12-1 and the bottom case 12-2 to accumulate therein. A capacitor module 2 according to a second embodiment has a configuration to enhance the water discharging property of the inside of the case.

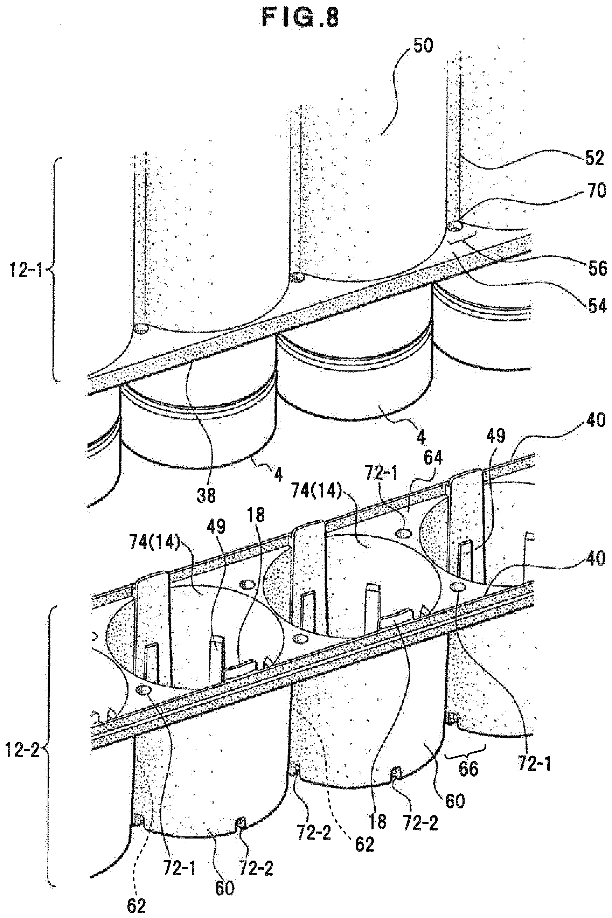

Fig. 8 depicts a portion of the capacitor module 2 and the state where the bottom case 12-2 is decoupled from the main case 12-1. Plural cylinder portions 50 covering the outer shape of each of the capacitors 4 are formed in the main case 12-1. The accommodating portions 14 to accommodate the capacitors 4 are formed inside the cylinder portions 50. Each of the cylinder portions 50 is coupled with each other by coupling ribs 52 and reinforcing rib 54. The coupling ribs 52 protrude in the direction of the width of each of the cylinder portions 50 and couple the cylinder portions 50. The reinforcing rib 54 protrudes in the direction of the diameter of each of the cylinder portions 50 and is formed on a bottom face side of each of the cylinder portions 50. V-valley-like groove portions 56 are formed between the cylinder portions 50 on a side of the coupling ribs 52. The reinforcing rib 54 is a bridging portion that is set up in the direction of the intersection with the cylinder portions 50 that are the accommodating portions 14 and that extends across the cylinder portions 50. The large diameter portion 38 that protrudes toward the side of the bottom case 12-2 is formed in the reinforcing rib 54. The large diameter portion 38 functions as a fitting concave portion into which the small diameter portion 40 of the bottom case 12-2 is fitted. Setting the shape of the main case 12-1 to be the shape of the plural cylinders covering the outer shapes of the capacitors 4 can realize insulation and reduction of the weight compared to the shape having the resin burying the spaces between the cylinder portions 50. The reinforcing rib 54 can prevent any degradation of the strength of the capacitor module 2 due to the absence of any resin between the cylinder portions 50 and can reinforce the capacitor module 2.

Water draining holes 70 are formed at a border portion between the cylinder portion 50 and the reinforcing rib 54 in the main case 12-1. The water draining holes 70 are formed to discharge the water droplets adhering to the outer surface of the main case 12-1. The reinforcing rib 54 is formed in order to improve the strength of the capacitor module 2. The water droplets adhering to the outer surface move along the groove portions 56 and are blocked up by the reinforcing rib 54 while the water droplets can be discharged moving over the reinforcing ribs 54 by the water draining holes 70.

Similarly to the main case 12-1, plural cylinder portions 60 covering the outer shape of each of the capacitors 4 are formed in the bottom case 12-2. Similarly to the cylinder portions 50 of the main case 12-1, the cylinder portions 60 each function as the accommodating portion 14 for the capacitor 4. Each of the cylinder portions 60 is coupled with each other by coupling ribs 62 and reinforcing rib 64. The coupling ribs 62 protrude in the direction of the width of each of the cylinder portions 60 and couple the cylinder portions 60. The reinforcing rib 64 protrudes in the direction of the diameter of each of the cylinder portions 60 and is formed on a top face side of each of the cylinder portions 60. Similarly to the main case 12-1, V-valley-like groove portions 66 are formed between the cylinder portions 60 on a side of the coupling ribs 62. The reinforcing rib 64 is a bridging portion that is set up in the direction of the intersection with the cylinder portions 60 and that extends across the cylinder portions 60. The small diameter portion 40 as an in-fitting portion facing the side of the main case 12-1 is formed in the reinforcing rib 64. Similarly to the main case 12-1, setting the shape of the bottom case 12-2 to be the shape of the plural cylinders covering the outer shapes of the capacitors 4 can realize reduction of the weight compared to the shape having the resin burying the spaces between the cylinders. The reinforcing rib 64 prevents any degradation of the strength of the capacitor module 2 due to the absence of any resin between the cylinder portions and achieves a function of reinforcing the capacitor module 2.

Convex portions 49 are formed at equal intervals on the inner circumferential faces of the cylinder portions 60 of the bottom case 12-2. The diameter formed inside the convex portion 49 is set to be equal to or smaller than the diameter of the capacitor 4. Because the bottom face side of the capacitor 4 is therefore fixed and any vibration in the capacitor module 2 is prevented when the capacitor 4 is disposed in the bottom case 12-2, any load applied to the fixation portion of the bus bar coupling the capacitors 4 and the terminal fixing screw connecting the terminals is reduced, resulting in stabilization of the connection property.

Plural water discharging holes 72-2 are formed on the bottom side of the bottom case 12-2.

Water discharging holes 72-1 are also formed at the positions same as those of the water draining holes 70 described above in the reinforcing rib 64 of the bottom case 12-2. When the main case 12-1 and the bottom case 12-2 are coupled with each other, the water discharging holes 72-1 match with the water draining holes 70. Concave portions 74 each accommodating the bottom side of the capacitors 4 are formed in the bottom case 12-2. The concave portions 74 form the accommodating portion 14 of the capacitor module 2. Insulation of the capacitor 4 can more securely be established by forming the bottom face on the bottom side of the bottom case 12-2.

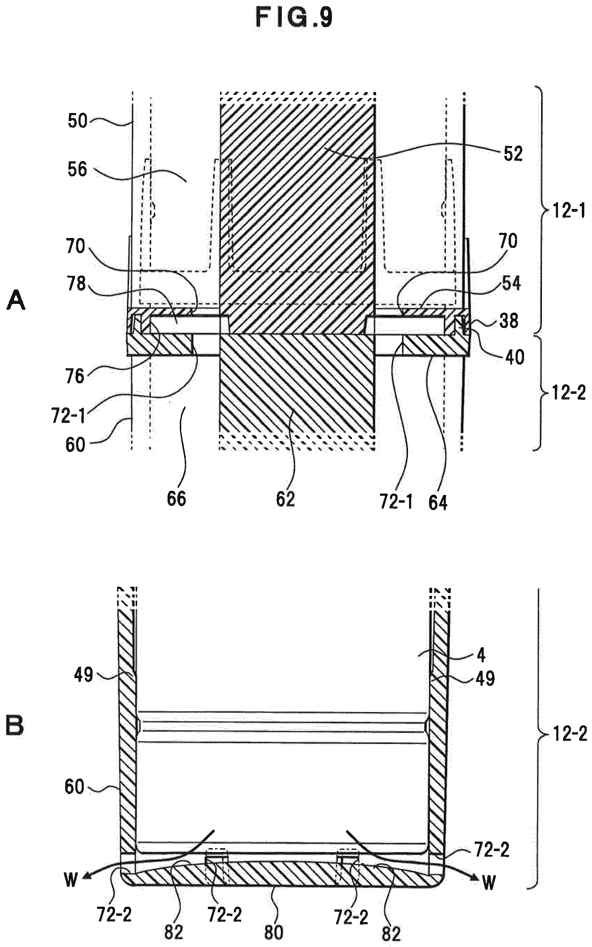

A of Fig. 9 depicts a cross-section taken along an IXA-IXA line of Fig. 1. The small diameter portion 40 to be the in-fitting portion of the side of the bottom case 12-2 is inserted into and fitted with the large diameter portion 38 to be the fitting concave portion of the side of the main case 12-1, and the main case 12-1 and the bottom case 12-2 are thereby coupled with each other. The capacitors 4 are fixed and held inside the main case 12-1 using, for example, the fixing members 16.

B of Fig. 9 depicts a cross-section taken along an IXB-IXB line of Fig. 1. Plural water discharging holes 72-2 are formed in the vicinity of bottom portions 80 of the bottom case 12-2. Each of the water discharging holes 72-2 is formed in a peripheral border of a bottom portion 80 and enables discharge of water in the direction toward the periphery of the bottom portion 80. The capacitor 4 is fixed by the convex portion 49 while a space is formed between the inner circumferential face of the cylinder portion 60 of the bottom case 12-2 having no convex portion 49 disposed thereon and the surface of the capacitor 4. The water such as the water droplets led from the water draining hole 70 and water droplets present between the main case 12-1 and the bottom case 12-2, and the capacitor 4 move toward the bottom face of the bottom case 12-2 passing through the space and are discharged from the water discharging hole 72-2 to the exterior.

An inclination portion 82 is formed in the inner face of the bottom portion 80 and is an example of a water leading portion that leads water infiltrating into the bottom case 12-2 to the water discharging hole 72-2. The inclination portion 82 is formed with a curved face of a curved convex portion that has the center of the bottom portion 80 formed as a convex.

According to the above configuration, the water and the water droplets infiltrating into the bottom case 12-2 are led to the water discharging hole 72-2 along the inclination of the inclination portion 82. The water discharging holes 72-2 are each disposed in the direction of the peripheral edge of the bottom portion 80 of the bottom case 12-2. When the inclination portion 82 is disposed on the side of the bottom portion 80 as above, the water and the water droplets are lead to the water discharging hole 72-2 and are discharged regardless of the orientation of the capacitor module 2. When the capacitor module 2 receives vibrations from the machine where the capacitor module 2 is mounted, the discharge of the water and the water droplets is facilitated. An arrow W indicates the discharge of the water and the direction of the discharge.

In the embodiment, the inclination portion 82 is exemplified as an example of the water leading portion while the water leading portion may only have a function of leading water infiltrating into the case to the water discharging hole 72-2, and the form thereof is not limited to the inclined face like the inclination portion 82. For example, the water leading portion may include a space such as the space between the inner bottom face of the bottom portion 80 and the bottom face of the capacitor 4. When this space is included, the water can be led to the water discharging hole 72-2 and the water discharging function is enhanced in combination with the inclination angle that the above inclination portion 82 has.

The vertically extending wall portion 76 forming the large diameter portion 38 is mounted on the upper face of the reinforcing rib 64 of the bottom case 12-2, and a cavity portion 78 is formed between the reinforcing rib 54 and the reinforcing rib 64. The cavity portion 78 is opened in the water draining hole 70 on the side of the reinforcing rib 54 and is also opened in the water discharging hole 72-1 on the side of the reinforcing rib 64. As above, the water draining hole 70 matches with the water discharging hole 72-1 and is disposed at a position facing the water discharging hole 72-1 through the cavity portion 78. This fact enables water adhering to the outer surface of the cylinder portion 50 and the like to be once led to the water draining hole 70 and to be thereafter discharged from the water discharging hole 72-1. When the capacitor module 2 is mounted with the terminals of the capacitors 4 up, water flowing into the groove portions 56 can be caused to escape from the main case 12-1 and the bottom case 12-2 through the water draining holes 70. The cavity portion 78 is in communication with the cylinder portion 60 of the bottom case 12-2. When the capacitor module 2 is mounted with the terminals of the capacitors 4 on the side thereof or obliquely up, water adhering to the outer surface of the main case 12-1 and the like flows into the bottom case 12-2 through the water draining holes 70 and is thereafter discharged from the water discharging holes 72-2.

Formation of the water discharging holes 72-1 and 72-2 at the plural positions of the bottom case 12-2 enables more secure discharging of the water even when the amount of water let into the water draining hole 70 is large. For the water led into the water draining hole 70, such routes are present as that to discharge the water from the water discharging hole 72-1 formed at the position facing the water draining hole 70, and that to lead the water to the bottom case 12-2 through the cavity portion 78 and to discharge the water from the water discharging hole 72-2 formed in the bottom face of the bottom case 12-2. The water can therefore be discharged when the amount of water led from the water draining hole 70 is large, or regardless of the angle at which the capacitor module 2 is mounted.

Because, the inclination portion 82 has the central portion of the bottom portion 80 formed as the convex as depicted in B of Fig. 9, the water discharging function thereof can be enhanced without modifying the size of the bottom case 12-2.

### <Effects of Second Embodiment>

(1)The capacitor module 2 can be reinforced by disposing the reinforcing ribs 54 and 64, and water droplets and the like adhering to the outer surface can be discharged.
(2)Any inconvenience can be avoided such as degradation of the capacitor module 2 due to accumulation of water.
(3)Because water can be discharged from the bottom case 12-2, the water discharging property of the capacitor module 2 can be enhanced and, even when water or water droplets infiltrate into the case, any accumulation of the water can be prevented.
(4)The waterproof structure necessary for the blocking of the infiltration of water can be reduced and the production cost of the capacitor module 2 can be reduced.
(5)Contribution is made to improvement of the reliability of the electric system of the machine having the capacitor module 2 mounted thereon.

### [Other Embodiments]

(1) When the capacitor module 2 is mounted on an automobile or another machine, the installation form of the capacitor module 2 is not limited to that with the sealing plate 8 and the terminals of the capacitors 4 up. To realize downsizing, reduction of the thickness, and the like of the machine on which the capacitor module 2 is mounted, the capacitor module 2 may be installed for the capacitors 4 to be sideways. For example, the capacitor module 2 is fixed to or directly mounted on the machine on which the capacitor module 2 in mounted such that a portion of the side face of each of the main case 12-1 and the bottom case 12-2 is a bottom face against the direction of the gravitational force.

In this case, a portion of the side face of the exterior case 6 of the capacitor 4 is the bottom face in the case of the capacitor module 2. The capacitor 4 is fixed to the inner wall face of the main case 12-1 through the fixing member 16 and, when the capacitor 4 is installed sideways, the capacitor 4 contacts with the fixing member 16 and a load in the direction of the gravitational force concentrates and acts on the portion of the exterior case 6 disposed on the side of the bottom face. As above, in the fixing member 16, the protruding portion 31 is formed on the side of the inner face of the wedge portion 22 and the protruding portion 31 thereof partially presses strongly the outer circumferential face of the exterior case 6 of the capacitor 4 to fix the capacitor 4. When the disposition position of the protruding portion 31 and the direction of the bottom face of the exterior case 6 match with each other, the load may act on the protruding portion 31 due to the gravitational force in a concentrated manner. In this case, the capacitor 4 receives a reactive force concentrated thereon against the load at the portion where the capacitor 4 contact with the protruding portion 31 in the concentrated manner.

When the capacitors 4 are installed sideways, in the capacitor module 2, the disposition orientation of the fixing member 16 may be set such that any of the wedge portions 22 of the fixing member 16 is not disposed at the position in the direction of the gravitational force. As to the fixing member 16, the wedge portions 22 are disposed at predetermined angles with the direction of the gravitational force of the capacitor 4 in the right and left direction thereof. Especially, the angles for disposing the wedge portions 22 are set such that the wedge portions 22 are away from each other each at an angle of 15 [°] or larger with the direction of the gravitational force on the right and left. The possibility that
the load acts on the wedge portions 22 due to the gravitational force in the concentrated manner can thereby effectively be avoided. This setting of the installation position of the fixing member 16 is not limited to the case, for example, where the capacitor 4 is installed sideways in an orientation of 90 degrees with the direction of the gravitational force. The fixing member 16 may be set such that the wedge portions 22 are not disposed on the side of the bottom face in the direction of the inclination of the capacitor 4.

According to the above configuration, the load in the direction of the gravitational force of the capacitor 4 can be prevented from acting on the bottom face side of the capacitor 4 installed in a inclined state in the concentrated manner, by the wedge portions 22 of the fixing member 16. The capacitor 4 can prevent any breakage of the capacitor 4 because any excessive load does not act on a portion of the installation plane in the concentrated manner.

(2)In the above embodiment, in the fixing member 16, the protruding portions 31 formed in the inner circumferential face of the annular portion 20 and the inner circumferential faces of the wedge portions 22 are coupled with each other to form the one same inner circumferential face while the configuration is not limited to this. The inner circumferential faces of the wedge portions 22 may not protrude from the inner circumferential face of the annular portion 20 and the inner circumferential face of the annular portion 20 and the inner circumferential faces of the wedge portions 22 may have the same one inner circumferential face. When the capacitor 4 is inserted into the accommodating portion 14, the wedge portions 22 are pushed to the exterior case 6 for the capacitor 4 by the tapered face 30 of the accommodating portion 14, and the exterior case 6 can partially be pressed resulting in rigid fixation.

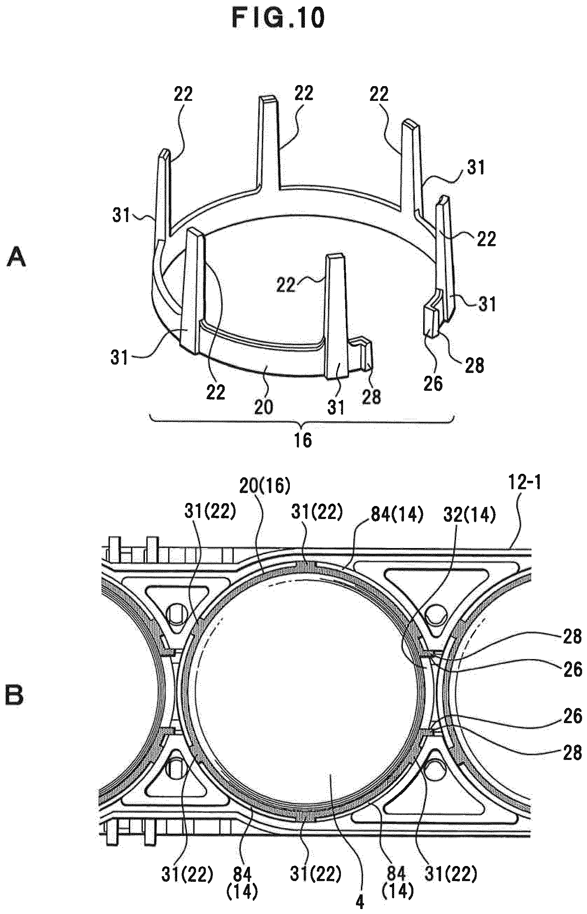

As depicted in A of Fig. 10, in the fixing member 16, the protruding portions 31 may be formed in a portion of the outer circumferential face of the annular portion 20, and the protruding portions 31 and the outer circumferential faces of the wedge portions 22 may be coupled with each other to form the same one face. For example, as depicted in B of Fig. 10, as to the fixing member 16, the inner circumferential face of the annular portion 20 evenly presses the overall outer circumferential face of the capacitor 4 and the outer circumferential faces of the wedge portions 22 partially press strongly the inner wall of the main case 12-1 to fix the capacitor 4. Because the fixing member 16 holding the capacitor 4 is thereby strongly pressed against the inner wall face of the main case 12-1 to be fixed thereto, even when the capacitor module 2 is vibrated, any move of the fixing member 16 toward the opening side of the accommodating portion 14 is suppressed, and the fixation is maintained.

As to the fixing member 16, the protruding portions 31 contact with the inner wall face of the main case 12-1 and spaces 84 are thereby formed each between the outer side of the annular portion 20 except the protruding portions 31 of the annular portion 20 and the accommodating portion 14. The spaces 84 function as water discharging routes to cause the dew condensation water generated in the accommodating portion 14 and water infiltrating from the exterior to flow into the main case 12-1 and lead the water to the discharging side. Foreign objects such as the water in the main case 12-1 are caused to flow to the side of the bottom case 12-2 through, for example, the spaces 84 and are led to the exterior of the case through the water discharging holes 72-1 or the water discharging holes 72-2.

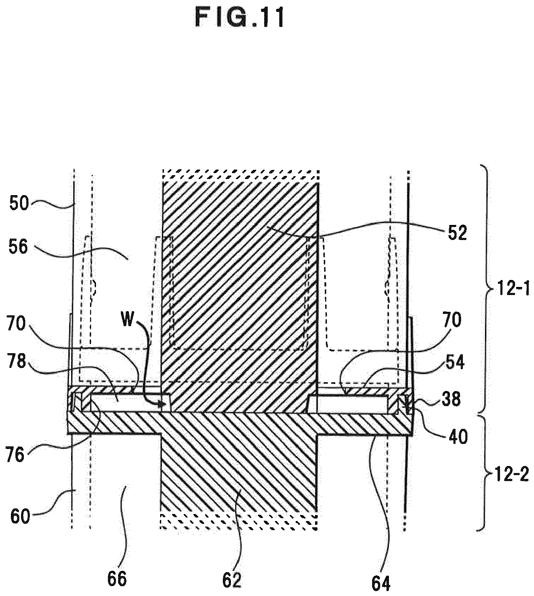

According to the configuration, any water can be prevented from accumulating in the accommodating portion 14 and can externally be discharged, and any inconvenience such as degradation of the capacitor module 2 due to the accumulation of the water can be avoided to enhance the reliability of the capacitor module 2.
(3)The shape of the cut-out portion 42 may gradually be narrowed toward a side of the external terminals for the capacitor 4. Shaping the cut-out portion 42 in this manner causes the engagement protrusions 28 to inwardly shrink when the fixing member 16 is inserted, and the annular portion 20 is constricted toward a side of the capacitor 4. The force of the wedge portions 22 to constrict the capacitor 4 is increased and the fixing strength is improved.
(4)Though the cut-out portion 26 is formed in the annular portion 20 of the fixing member 16 in the embodiment, the annular portion 20 may have an endless shape without forming the cut-out portion 26.
(5)Though the locking protrusion 18 and the fixing member 16 are disposed without abutting on each other in the embodiment, the locking protrusion 18 and the fixing member 16 may be disposed so as to abut on each other. Employing this disposition enables the positioning of the fixing member 16 in the main case 12-1. For example, as depicted in B of Fig. 5, the locking protrusion 18 protruding from the bottom case 12-2 to the main case 12-1 is formed, and the locking protrusion 18 is disposed to abut on the fixing member 16. With this configuration, even when the capacitor module 2 is vibrated, any move of the fixing member 16 toward the opening side of the main case 12-1 can be prevented, and the fixation of the main case 12-1 and the capacitor 4 is maintained.
(6)Though the fixing member 16 is inserted into the accommodating portion 14 after fixing the capacitor 4 to the main case 12-1 using the auxiliary terminal or the external terminals in the embodiment, the fixing member 16 may be inserted into the accommodating portion 14 to be attached to the main case 12-1 before the auxiliary terminal or the external terminals is/are fixed to the main case 12-1. With this procedure, because the connection of the external terminals and the auxiliary terminal is conducted after the fixation of the capacitor 4 to the main case 12-1 is secured, the load applied to the auxiliary terminal and the external terminals can be reduced during the production process of the capacitor module 2.
(7)Though the inclination portion 82 is formed in the circumferential direction with the central portion of the bottom portion 80 as its top portion in the embodiment, the configuration is not limited to this. The inclination portion may only be an inclination portion having the side of the water discharging hole 72-2 as its downstream side. The form of the inclination portion 82 may also be a curved face, a flat inclined face, or a groove.
(8)Thought the water draining hole 70 is formed in the border portion between the cylinder portion 50 and the reinforcing rib 54 in the embodiment, the configuration is not limited to this. The water draining hole 70 may be formed in the vicinity of the border portion between the cylinder portion 50 and the reinforcing rib 54. The water draining hole 70 may be disposed in the reinforcing rib 54 or the cylinder portion 50 in the vicinity of the border portion. When the water draining hole 70 is formed at a position at which water droplets adhering to the outer surface of the capacitor module 2 and the like accumulate, the water blocked by the reinforcing rib 54 does not accumulate on the outer surface of the main case 12-1. Plural water draining holes 70 may be disposed in the groove portions 56 and 66.
(9)Though the water led to the water draining hole 70 is discharged from the water discharging hole 72-1 formed in the border portion of the cylinder portion 60 and the reinforcing rib 64 of the bottom case 12-2 and the water discharging hole 72-2 formed in the bottom portion of the bottom case 12-2, in the embodiment, the configuration is not limited to this. For example, as depicted in Fig. 11, only the water discharging holes 72-2 may also be formed in the bottom face of the bottom case 12-2. Fig. 11 depicts a cross-section of a variation of the case member. With this configuration, the water led from the water draining hole 70 into the case can be discharged from the water discharging hole 72-2 formed in the bottom face of the bottom case 12-2, after passing through the bottom case 12-2 through the cavity portion 78 formed by the reinforcing rib 54 and the reinforcing rib 64. In Fig. 11, the arrow W indicates the discharge of the water and the direction of the discharge.
   Only the water discharging holes 72-1 formed in the border portion of the cylinder portion 60 and the reinforcing rib 64 of the bottom case 12-2 may be formed as the water discharging holes. In this case, through-holes penetrating the reinforcing rib 54 and the reinforcing rib 64 are formed from the water draining hole 70 and the water discharging hole 72-1 as the openings, and the water blocked by the reinforcing rib 54 can be discharged by the through-holes.
(10)Though the case member is divided into the main case 12-1 and the bottom case 12-2 as the two case members in the embodiment, the first case portion or the second case portion may be configured by plural members.
(11)Though the case has been described in the embodiment where, for the cylinder portion 50, the fixing member 16 is used for the fixation of the capacitor 4 accommodated therein, the configuration is not limited to this. For example, the capacitor 4 may be accommodated without using the fixing member 16, or may be fixed using another fixing means not depicted.

As above, the most preferred embodiments of the technique of this disclosure and the like have been described. The technique of this disclosure is not limited to those of the above description. Those skilled in the art can make various modifications and changes thereto based on the gist of the present invention described in claims or disclosed in MODES FOR CARRYING OUT THE INVENTION. It is needless to say that such modifications and changes are included in the scope of the technique of this disclosure.

### INDUSTRIAL APPLICABILITY

The technique of this disclosure provides the capacitor module including the case member covering plural capacitors. The spaces are formed by the fixing member between the capacitor and the inner wall portion of the case member avoiding the sealing curling portion. The stress applied to the sealing curling portion can thereby be avoided and, in addition, any performance degradation of the capacitors can be prevented because no water accumulates in the case. The technique is therefore useful.

### EXPLANATIONS OF LETTERS OR NUMBERS

2 capacitor module
4 capacitor
6 exterior case
8 sealing plate
10 sealing curling portion
11, 13 attaching portion
12-1 main case
12-2 bottom case
14 accommodating portion
16 fixing member
18 locking protrusion
20 annular portion
22 wedge portion
24, 30 tapered face
26 cut-out portion
28 engagement protrusion
31 protruding portion
32, 33, 84 space
34 opening edge portion
36 sealing member
38 large diameter portion
40 small diameter portion
42 cut-out portion
49 convex portion
50, 60 cylinder portion
52, 62 coupling rib
54, 64 reinforcing rib
56, 66 groove portion
70 water draining hole
72-1, 72-2 water discharging hole
74 concave portion
76 vertically extending wall portion
78 cavity portion
80 bottom portion
82 inclination portion

## Claims

1. A capacitor module (2) comprising a case member having accommodating portions (14) to accommodate plurality of capacitors (4), the capacitor module (2) comprising
a space (32) between an inner wall portion of the accommodating portions (14) and the capacitor (4), wherein
a fixing member (16) is disposed in the space (32), and wherein
the fixing member (16) comprises
an annular portion (20) that surrounds a circumferential portion of the capacitor (4), and
a wedge portion (22) that is formed on the annular portion (20) in a direction of intersection with the annular portion (20),
**characterized in that** the annular portion (20) of the fixing member (16) has a cut-out portion (26) at a part of the annular portion (20).

2. The capacitor module (2) according to claim 1,
wherein
a protruding portion (31) of the fixing member (16) is formed in a portion of an inner circumferential face or an outer circumferential face of the annular portion (20), and wherein
an inner circumferential face or an outer circumferential face of the protruding portion (31) is coupled with an inner circumferential face or an outer circumferential face of the wedge portion (22) to form one same face.

3. The capacitor module (2) according to claim 1 or 2, wherein
a cut-out portion (42) is formed in the case member, and wherein
the fixing member (16) comprises in the annular portion (20) an engagement portion (28) to be engaged with the cut-out portion (42) of the case member, and is engaged with the case member using the engagement portion (28) .

4. The capacitor module (2) according to any one of claims 1 to 3, wherein
the case member is divided into a first case portion (12-1) that covers a terminal side of the capacitor (4) and a second case portion (12-2) that covers a bottom portion side of the capacitor (4), and wherein
the fixing member (16) is disposed on a side of the first case portion (12-1).

5. The capacitor module (2) according to claim 4, wherein
the second case portion (12-2) comprises a locking portion (18) that is inserted between the first case portion (12-1) and the capacitor (4).

6. The capacitor module (2) according to claim 4 or 5, wherein
the first case portion (12-1) comprises
a reinforcing rib (54) that is set up in the direction of intersection with the accommodating portions (14) and that extends across the accommodating portions (14), and
a water draining hole (70) that leads water droplets adhering to a surface of the accommodating portions (14), and wherein
the second case portion (12-2) comprises a water discharging hole (72-1, 72-2) that discharges water led from the water draining hole (70).

7. The capacitor module (2) according to claim 6, wherein
the water draining hole (70) is formed in the reinforcing rib (54) or outside the reinforcing rib (54).

8. The capacitor module (2) according to claim 6, wherein
the water discharging hole (72-2) is formed in a bottom face (80) of the second case portion (12-2).

9. The capacitor module (2) according to claim 6 or 8, wherein
the second case portion (12-2) comprises in an inner bottom face thereof an inclination portion (82) that leads the water led from the water draining hole (70) to the water discharging hole (72-2).

10. The capacitor module (2) according to any one of claims 6 to 9, wherein
the second case portion (12-2) comprises the water discharging hole (72-1) in a reinforcing rib (64), that is set up in the direction of the intersection with the accommodating portions (14) and that extends across the accommodating portions (14), and wherein
the water led from the water draining hole (70) is discharged from the reinforcing rib (64) of the second case portion to the water discharging hole (72-1).

11. A production method for a capacitor module (2) comprising a case member that comprises accommodating portions (14) accommodating a plurality of capacitors (4), the production method comprising the steps of:
attaching a fixing member (16) as defined in claim 1 to an exterior case (6) for the capacitor (4);
installing the capacitor (4) together with the fixing member (16) to the case member; and
disposing the fixing member (16) between an inner wall of the case member and the capacitor (4);
**characterized in that** the fixing member (16) comprises an annular portion (20) having a cut-out portion (26) at a part of the annular portion (20).

## Patentansprüche

1. Kondensatormodul (2), umfassend ein Gehäuseelement mit Aufnahmeabschnitten (14) zur Aufnahme von einer Vielzahl von Kondensatoren (4), wobei das Kondensatormodul (2) Folgendes umfasst:
einen Raum (32) zwischen einem Innenwandabschnitt der Aufnahmeabschnitte (14) und dem Kondensator (4),
wobei ein Befestigungselement (16) in dem Raum (32) angeordnet ist, und
wobei das Befestigungselement (16) Folgendes umfasst:
einen Ringabschnitt (20), der einen Umfangsabschnitt des Kondensators (4) umgibt, und
einen Keilabschnitt (22), der auf dem Ringabschnitt (20) in Richtung eines Schnittpunkts mit dem Ringabschnitt (20) ausgebildet ist,
**dadurch gekennzeichnet, dass** der Ringabschnitt (20) des Befestigungselements (16) einen Aussparungsabschnitt (26) an einem Teil des Ringabschnitts (20) aufweist.

2. Kondensatormodul (2) gemäß Anspruch 1,
wobei ein vorstehender Abschnitt (31) des Befestigungselements (16) in einem Abschnitt einer Innenumfangsfläche oder einer Außenumfangsfläche des Ringabschnitts (20) ausgebildet ist, und
wobei eine Innenumfangsfläche oder eine Außenumfangsfläche des vorstehenden Abschnitts (31) mit einer Innenumfangsfläche oder einer Außenumfangsfläche des Keilabschnitts (22) gekoppelt ist, um eine und dieselbe Fläche zu bilden.

3. Kondensatormodul (2) gemäß Anspruch 1 oder 2,
wobei ein Aussparungsabschnitt (42) im Gehäuseelement ausgebildet ist, und
wobei das Befestigungselement (16) im Ringabschnitt (20) einen Eingriffsabschnitt (28) umfasst, um mit dem Aussparungsabschnitt (42) des Gehäuseelements in Eingriff zu sein, und mit dem Gehäuseelement durch Anwendung des Eingriffsabschnitts (28) in Eingriff ist.

4. Kondensatormodul (2) gemäß einem der Ansprüche 1 bis 3,
wobei das Gehäuseelement in einen ersten Gehäuseabschnitt (12-1), der eine Anschlussseite des Kondensators (4) abdeckt, und einen zweiten Gehäuseabschnitt (12-2), der eine untere Abschnittsseite des Kondensators (4) abdeckt, unterteilt ist, und
wobei das Befestigungselement (16) auf einer Seite des ersten Gehäuseabschnitts (12-1) angeordnet ist.

5. Kondensatormodul (2) gemäß Anspruch 4,
wobei der zweite Gehäuseabschnitt (12-2) einen Verriegelungsabschnitt (18) umfasst, der zwischen dem ersten Gehäuseabschnitt (12-1) und dem Kondensator (4) eingefügt ist.

6. Kondensatormodul (2) gemäß Anspruch 4 oder 5,
wobei der erste Gehäuseabschnitt (12-1) Folgendes umfasst:
eine Verstärkungsrippe (54), die in die Richtung eines Schnittpunkts mit den Aufnahmeabschnitten (14) eingerichtet ist und die sich über die Aufnahmeabschnitte (14) hinweg erstreckt, und
ein Wasser-Drainage-Loch (70), das Wassertröpfchen, die an einer Oberfläche der Aufnahmeabschnitte (14) haften, führt, und
wobei der zweite Gehäuseabschnitt (12-2) ein Wasser-Auslass-Loch (72-1, 72-2) umfasst, welches das vom Wasser-Drainage-Loch (70) geführte Wasser austreten lässt.

7. Kondensatormodul (2) gemäß Anspruch 6,
wobei das Wasser-Drainage-Loch (70) in der Verstärkungsrippe (54) oder außerhalb der Verstärkungsrippe (54) ausgebildet ist.

8. Kondensatormodul (2) gemäß Anspruch 6,
wobei das Wasser-Auslass-Loch (72-2) in einer Bodenfläche (80) des zweiten Gehäuseabschnitts (12-2) ausgebildet ist.

9. Kondensatormodul (2) gemäß Anspruch 6 oder 8,
wobei der zweite Gehäuseabschnitt (12-2) in einer Innenbodenfläche desselben einen Neigungsabschnitt (82) umfasst, der das vom Wasser-Drainage-Loch (70) geführte Wasser zum Wasser-Auslass-Loch (72-2) führt.

10. Kondensatormodul (2) gemäß einem der Ansprüche 6 bis 9,
wobei der zweite Gehäuseabschnitt (12-2) das Wasser-Auslass-Loch (72-1) in einer Verstärkungsrippe (64) umfasst, die in die Richtung des Schnittpunkts mit den Aufnahmeabschnitten (14) eingerichtet ist und die sich über die Aufnahmeabschnitte (14) hinweg erstreckt, und
wobei das vom Wasser-Drainage-Loch (70) geführte Wasser von der Verstärkungsrippe (64) des zweiten Gehäuseabschnitts zum Wasser-Auslass-Loch (72-1) hin austreten gelassen wird.

11. Herstellungsverfahren für ein Kondensatormodul (2), umfassend ein Gehäuseelement, das Aufnahmeabschnitte (14) zur Aufnahme einer Vielzahl von Kondensatoren (4) umfasst, wobei das Herstellungsverfahren die folgenden Schritte umfasst:
Anbringen eines wie in Anspruch 1 definierten Befestigungselements (16) an einem Außengehäuse (6) für den Kondensator;
Installieren des Kondensators (4) zusammen mit dem Befestigungselement (16) am Gehäuseelement; und
Anordnen des Befestigungselements (16) zwischen einer Innenwand des Gehäuseelements und dem Kondensator (4);
**dadurch gekennzeichnet, dass** das Befestigungselement (16) einen Ringabschnitt (20) umfasst, der einen Aussparungsabschnitt (26) an einem Teil des Ringabschnitts (20) aufweist.

## Revendications

1. Module de condensateur (2) comprenant un élément de carter ayant des parties de logement (14) pour loger une pluralité de condensateurs (4), le module de condensateur (2) comprenant :
un espace (32) entre une partie de paroi interne des parties de logement (14) et le condensateur (4), dans lequel :
un élément de fixation (16) est disposé dans l'espace (32), et dans lequel :
l'élément de fixation (16) comprend :
une partie annulaire (20) qui entoure une partie circonférentielle du condensateur (4), et
une partie de cale (22) qui est formée sur la partie annulaire (20) dans une direction d'intersection avec la partie annulaire (20),
**caractérisé en ce que** la partie annulaire (20) de l'élément de fixation (16) a une partie découpée (26) au niveau d'une partie de la partie annulaire (20).

2. Module de condensateur (2) selon la revendication 1, dans lequel :
une partie en saillie (31) de l'élément de fixation (16) est formée dans une partie d'une face circonférentielle interne ou une face circonférentielle externe de la partie annulaire (20), et dans lequel :
une face circonférentielle interne ou une face circonférentielle externe de la partie en saillie (31) est couplée avec une face circonférentielle interne ou une face circonférentielle externe de la partie de cale (22) afin de former une seule et même face.

3. Module de condensateur (2) selon la revendication 1 ou 2, dans lequel :
une partie découpée (42) est formée dans l'élément de carter, et dans lequel :
l'élément de fixation (16) comprend, dans la partie annulaire (20), une partie de mise en prise (28) destinée à être mise en prise avec la partie découpée (42) de l'élément de carter, et est mise en prise avec l'élément de carter à l'aide de la partie de mise en prise (28).

4. Module de condensateur (2) selon l'une quelconque des revendications 1 à 3, dans lequel :
l'élément de carter est divisé en une première partie de carter (12-1) qui recouvre un côté terminal du condensateur (4) et en une seconde partie de carter (12-2) qui recouvre un côté de partie inférieure du condensateur (4), et dans lequel :
l'élément de fixation (16) est disposé sur un côté de la première partie de carter (12-1).

5. Module de condensateur (2) selon la revendication 4, dans lequel :
la seconde partie de carter (12-2) comprend une partie de verrouillage (18) qui est insérée entre la première partie de carter (12-1) et le condensateur (4).

6. Module de condensateur (2) selon la revendication 4 ou 5, dans lequel :
la première partie de carter (12-1) comprend :
une nervure de renforcement (54) qui est installée dans la direction d'intersection avec les parties de logement (14) et qui s'étend sur les parties de logement (14), et
un trou d'évacuation d'eau (70) qui dirige les gouttes d'eau qui adhèrent vers une surface des parties de logement (14), et dans lequel :
la seconde partie de carter (12-2) comprend un trou de décharge d'eau (72-1, 72-2) qui décharge l'eau provenant du trou d'évacuation d'eau (70).

7. Module de condensateur (2) selon la revendication 6, dans lequel :
le trou d'évacuation d'eau (70) est formé dans la nervure de renforcement (54) ou à l'extérieur de la nervure de renforcement (54).

8. Module de condensateur (2) selon la revendication 6, dans lequel :
le trou de décharge d'eau (72-2) est formé dans une face inférieure (80) de la seconde partie de carter (12-2).

9. Module de condensateur (2) selon la revendication 6 ou 8, dans lequel :
la seconde partie de carter (12-2) comprend dans sa face inférieure interne, une partie d'inclinaison (82) qui dirige l'eau provenant du trou d'évacuation d'eau (70) au trou de décharge d'eau (72-2).

10. Module de condensateur (2) selon l'une quelconque des revendications 6 à 9, dans lequel :
la seconde partie de carter (12-2) comprend le trou de décharge d'eau (72-1) dans une nervure de renforcement (64), qui est installée dans la direction de l'intersection avec les parties de logement (14) et qui s'étend sur les parties de logement (14), et dans lequel :
l'eau provenant du trou d'évacuation d'eau (70) est déchargée de la nervure de renforcement (64) de la seconde partie de carter vers le trou de décharge d'eau (72-1).

11. Procédé de production pour un module de condensateur (2) comprenant un élément de carter qui comprend des parties de logement (14) logeant une pluralité de condensateurs (4), le procédé de production comprenant les étapes consistant à :
fixer un élément de fixation (16) selon la revendication 1, sur un carter extérieur (6) pour le condensateur (4) ;
installer le condensateur (4) conjointement avec l'élément de fixation (16) sur l'élément de carter ; et
disposer l'élément de fixation (16) entre une paroi interne de l'élément de carter et le condensateur (4) ;
**caractérisé en ce que** l'élément de fixation (16) comprend une partie annulaire (20) ayant une partie découpée (26) au niveau d'une partie de la partie annulaire (20).
